# EUROPEAN PATENT APPLICATION

(11) **EP 1 734 753 A1**
(43) Date of publication of application: **20.12.2006**
(21) Application number: 06114701.3
(22) Date of filing: 30.05.2006
(51) Int. Cl.: H04N 5/445, H04N 7/08

(54) **Handling appendix information**

(30) Priority: 07.06.2005 KR 2005048609
(71) Applicant: Samsung Electronics Co., Ltd., Suwon-si, Gyeonggi-Do (KR)
(72) Inventor: Yoo, Eun-jong, Yeongtong-gu Suwon-si Gyeonggi-do (KR)
(74) Representative: Derry, Paul Stefan

(57) **Abstract**

A display apparatus which receives a signal containing at least one of appendix information and video information, processes and displays the received signal, wherein the display apparatus includes an appendix signal extracting unit which extracts an appendix signal corresponding to the appendix information contained in the received signal; and a controller which reads the appendix information corresponding to the appendix signal that is extracted by the appendix signal extracting unit at a predetermined read-time interval, from the appendix signal extracting unit, and decodes the read appendix information. Thus, a display apparatus and a control method thereof are provided which can effectively read appendix information without supporting an interrupt method for reading the appendix information, and which can thereby display an appendix screen.

## Description

The present invention relates to handling appendix information.

A conventional display capable of reproducing appendix information, such as a caption, comprises a display unit, a video signal receiver operable to receive a video signal including the appendix information, a decoder operable to decode the video signal received through the video signal receiver, and a signal processor operable to process a decoded video signal to be displayed on the display unit.

A process of decoding the appendix information is as follows. The video signal includes odd and even fields. In general, the video signal includes appendix information in a 21st scan line of an odd field of the video signal and a 284th scan line of an even field of the video signal. The decoder extracts an appendix signal corresponding to the appendix information from the even and odd fields of the input video signal, and stores the appendix information of the appendix signal. In this case, the decoder extracts the appendix signal from the even and odd fields on the basis of a vertical synchronization signal of the video signal, and generates a predetermined interrupt signal every time it extracts the appendix signal. A controller for controlling the decoding process reads the stored appendix information every time the interrupt signal is generated, and then decodes the read appendix information. Then, the signal processor processes picture and appendix signals included in the video signal that is decoded by and output from the decoder, so that the display unit displays the picture and the appendix information. Here, the signal processor includes an on screen display (OSD) generator configured to provide OSD appendix information so as to display the appendix information (e.g., a caption) on the display unit.

However, the conventional display apparatus can read the appendix information only when it supports an interrupt method for reading the appendix information.

In other words, the conventional display apparatus cannot read the extracted appendix information unless the controller supports the interrupt method.

According to a first aspect of the invention, there is provided an apparatus according to claim 1.

According to a second aspect of the invention, there is provided a method according to claim 9.

According to an aspect of the present invention, there is provided a display apparatus receiving a signal containing at least one of appendix information and video information, processing and displaying the signal, the display apparatus comprising: an appendix signal extracting unit which extracts an appendix signal corresponding to the appendix information among received signals; and a controller which reads the appendix information corresponding to the appendix signal extracted by the appendix signal extracting unit at a predetermined read-time interval from the appendix signal extracting unit, and decodes the read appendix information.

According to an aspect of the present invention, the appendix signal extracting unit periodically extracts the appendix signal corresponding to the appendix information among the received signals at a predetermined extract-time interval, and updates and stores the appendix information corresponding to the extracted appendix signal.

According to an aspect of the present invention, the controller periodically reads the appendix information stored in the appendix signal extracting unit at the predetermined read-time interval, and decodes the read appendix information.

According to an aspect of the present invention, the predetermined read-time interval is set to be shorter than the predetermined extract-time interval.

According to an aspect of the present invention, the controller periodically reads the appendix information stored in the appendix signal extracting unit at the predetermined read-time interval, determines whether the read appendix information and previously read appendix information are included in the same field, and decodes the read appendix information when the read appendix information and the previously read appendix information are not included in the same field.

According to an aspect of the present invention, the controller determines whether the read appendix information contains valid information when the read appendix information and the previously read appendix information are not included in the same field, and decodes the read appendix information when the read appendix information contains valid information.

According to an aspect of the present invention, the display apparatus further comprises an On Screen Display (OSD) generator which generates an appendix screen corresponding to the appendix information, wherein the controller controls the OSD controller to generate the appendix screen corresponding to the decoded appendix information.

According to an aspect of the present invention, the appendix information comprises at least one of caption information, V-CHIP information and teletext (TTX) information.

According to an aspect of the present invention, the controller reads the appendix information from the appendix signal extracting unit using an Inter-Integrated Circuit (I2C).

According to an aspect of the present invention, there is provided a control method of a display apparatus which receives a signal containing at least one of appendix information and video information, and processes and displays the received signal, the control method comprising: periodically extracting an appendix signal corresponding to the appendix information contained in the received signal at a predetermined extract-time interval; updating and storing the appendix information corresponding to the extracted appendix signal; periodically reading the stored appendix information at a predetermined read-time interval; and decoding the read appendix information.

According to an aspect of the present invention, the predetermined read-time interval is set to be shorter than the predetermined extract-time interval.

According to an aspect of the present invention, the decoding of the read appendix information comprises, determining whether the read appendix information and previously read appendix information are included in the same field; and decoding the read appendix information when the read appendix information and the previously read appendix information are not included in the same field.

According to an aspect of the present invention, the decoding of the read appendix information comprises determining whether the read appendix information contains valid information when the read appendix information and the previously read appendix information are not included in the same field; and decoding the read appendix information when the read appendix information contains valid information.

According to an aspect of the present invention, the control method further comprises generating an appendix screen corresponding to the decoded appendix information and displaying the appendix screen.

According to an aspect of the present invention, the appendix information comprises at least one of caption information, V-CHIP information, and teletext (TTX) information.

An embodiment of the invention will now be described by way of example only, with reference to the accompanying drawings, in which:
Figure 1 is a block diagram of a display apparatus according to the present invention;
Figure 2 is a flowchart of a method of operating a caption extracting decoder of the display apparatus shown in Figure 1; and
Figure 3 is a flowchart of a method of operating the display apparatus shown in Figure 1.

In the accompanying drawings, like reference numerals refer to like elements throughout.

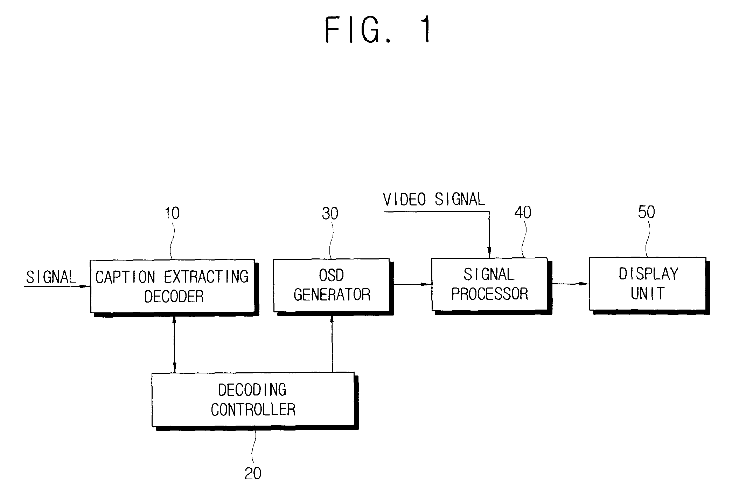

Figure 1 shows a display apparatus which includes a display unit 50 and a caption extracting decoder 10. The caption extracting decoder 10 functions as an appendix signal extractor that extracts an appendix signal corresponding to appendix information from a video signal received at a signal input unit (not shown). The video signal contains at least one of appendix information and video information. The display apparatus further includes a decoding controller 20, which periodically reads the appendix information at a predetermined read-time interval and decodes the read appendix information, an On Screen Display (OSD) generator 30, which generates an appendix screen corresponding to the appendix information that is decoded by the decoding controller 20, a video signal processor (not shown) which processes and provides a video screen, and a signal processor 40, which processes the appendix screen and the video screen for display on the display unit 50.

The appendix information may comprise at least one of caption information, V-CHIP information and teletext (TTX) information. In the example below, the appendix information comprises caption data.

The display unit 50, which receives and displays video and caption signals, includes a display panel (not shown) which displays images and captions thereon and a panel driver (not shown) which processes a signal from the signal processor 40 and displays the processed signal on the display unit 50. The display unit and the panel correspond to the type of the display.

The signal processor 40 converts a signal that contains at least one of a caption screen signal that is output from the OSD generator 30 and/or a video signal that is processed and provided by the video signal processor (not shown) into a signal having a format suitable for display on the display unit 50, and then outputs the converted signal to the display unit 50.

The caption extracting decoder 10 periodically extracts an appendix signal that corresponds to the caption information from the received signal at a predetermined extract-time interval. In other words, the caption extracting decoder 10 extracts caption signals corresponding to the 21st scan line of an odd field and the 284th scan line of an even field of the received signal, and then stores the caption information of the extracted caption signals. Moreover, the caption extracting decoder 10 extracts the caption signals from the even and odd fields on the basis of a vertical synchronization signal of the received signal. For example, the caption extracting decoder 10 extracts the caption signal every 16 ms when the received signal is a National Television System Committee (NTSC) signal, and updates and stores the caption information every 16 ms.

The decoding controller 20 periodically reads the caption information stored in the caption extracting decoder 10 at a predetermined read-time interval. Further, the predetermined read-time interval is preferably, but not necessarily, shorter than the predetermined extract-time interval (in this example 16 ms). For example, the read-time interval may be 10 ms. Thus, the decoding controller 20 reads the caption information stored in the caption extracting decoder 10 at a rate corresponding to the read-time interval, in this case reading the caption information once every 10 ms. Preferably, the decoding controller 20 reads the caption information using an Inter-Integrated Circuit (I2C) from the caption extracting decoder 10. Thus, the decoding controller 20 reads caption information extracted by the caption extracting decoder 10 without receiving an interrupt signal that is generated every time the caption extracting decoder 10 extracts a caption signal.

The decoding controller 20 determines whether a currently read caption information and previously read caption information, i.e. caption information read just before the currently read caption information, are included in the same field. In other words, the decoding controller 20 determines whether the currently read caption information is included in an even field when the previously read caption information was included in an odd field, and determines whether the currently read caption information is included in an odd field when the previously read caption information was included in an even field.

The foregoing determination is provided for preventing the decoding controller 20 from reading and decoding caption information which is the same as previously read caption information, i.e. in instances in which the caption extracting decoder 10 does not store updated caption information because the extract-time interval (e.g. 16 ms) has not passed.

When, as a result of such a determination, it is determined that the current caption information and previous caption information are not included in the same field, the decoding controller 20 determines whether the current caption information is valid. In other words, the decoding controller 20 extracts a start bit of the current caption information to determine whether the current caption information is displayable. When the current caption information is determined to be valid, the decoding controller 20 decodes the current caption information and outputs the decoded caption information to the OSD generator 30 so as to control the OSD generator 30 to display a caption screen which corresponds to the caption information. Preferably, the decoding controller 20 can be achieved by a central processing unit (CPU).

The decoding controller 20 of the display apparatus periodically reads caption information from the caption extracting decoder 10 at a time interval (e.g., 10 ms) that is shorter than a time interval (e.g., 16 ms) at which the caption information is updated, and compares currently read caption information and previously read caption information for decoding. This process has the same effect as that of reading caption information based on a synchronised signal. Therefore, the display apparatus can read, decode and display caption information through conventional hardware without requiring reception of a specific interrupt signal from the caption extracting decoder 10.

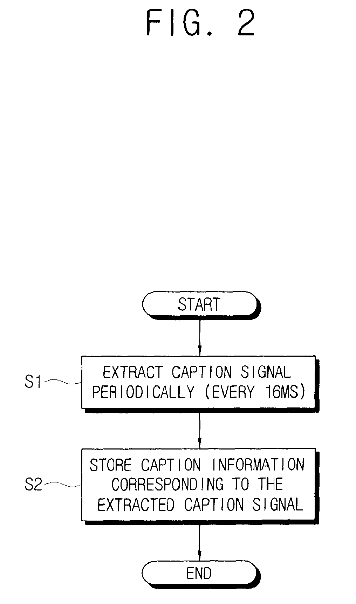

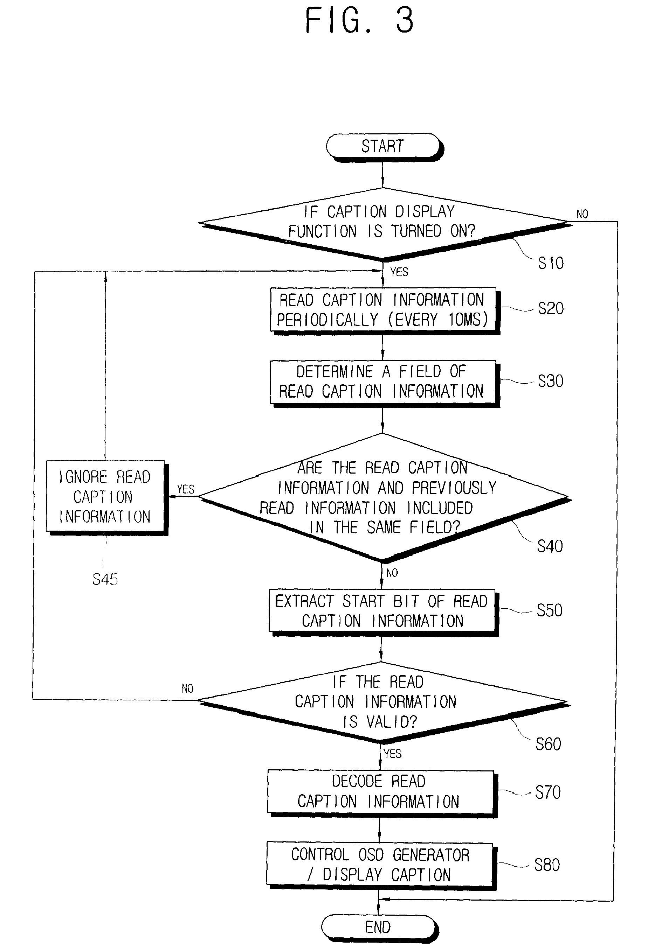

Below, a method of operating the display apparatus will be described with reference to Figures 2 and 3.

First, a method of operating the caption extracting decoder 10 is described with reference to Figure 2. At step S1, the caption extracting decoder 10 periodically extracts, every 16 ms, a caption signal that corresponds to the 21st scan line of the odd field and the 284th scan line of the even field among video signals on the basis of a vertical synchronization signal. Further, at step S2, the caption extracting decoder 10 updates information related to the caption signal and stores caption information corresponding to the extracted caption signal. Thus, the caption extracting decoder 10 updates caption information every 16 ms.

With reference to Figure 3,
at step S10, the decoding controller 20 checks whether a caption display function is turned on. If the caption display function is currently turned on, then at step S20, the decoding controller 20 periodically reads the caption information that is stored in the caption extracting decoder 10 (e.g., every 10 ms). At step S30, the decoding controller 20 determines field information of the read caption information. Further, at step S40, the decoding controller 20 determines whether a field in which currently read caption information is included is the same as a field in which previously read caption information is included. When it is determined that the current caption information and the previous caption information are included in the same field, the decoding controller 20 ignores the current caption information (step S45), and prepares to read the caption information for the next period. However, when the current caption information and the previous caption information are not included in the same field, the decoding controller 20 detects a start bit of the currently read caption information (step S50) and then determines whether the read caption information is valid on the basis of the start bit (step S60). If the read caption information is determined to be valid, the decoding controller 20 decodes the read caption information (step S70). At step S80, the decoding controller 20 then outputs the decoded caption information to the OSD generator 30 so as to control the OSD generator to generate a caption screen corresponding to the caption information and to display the caption screen.

As described above, the caption extracting decoder 10 periodically reads caption information at a given interval (e.g., every 10 ms) that is shorter than a given interval (e.g., every 16 ms) at which the caption information is updated, and decodes the read caption information by comparing it with previously read caption information. This process yields the same result as reading caption information on the basis of a vertical synchronization signal.

The figures 2 and 3 methods are implemented on hardware by software in the form of one or more computer programs.

It will be appreciated by those skilled in the art that various changes may be made to the embodiment hereinbefore described without departing from the invention, the scope of which is defined in the appended claims.

## Claims

1. Apparatus comprising:
means (10) configured to extract appendix information from a received signal; and
means (20) configured to read appendix information from the extracting means (10) at times separated by a predetermined read-time interval.

2. An apparatus according to claim 1, wherein the extracting means (10) is configured to extract the appendix signal periodically at a rate corresponding to a predetermined extract-time interval and to update and store the appendix information.

3. An apparatus according to claim 2, wherein the means (20) configured to read appendix information is arranged to read periodically appendix information from the extracting means (10).

4. An apparatus according to claim 3, wherein the read-time interval is shorter than the extract-time interval.

5. An apparatus according to any preceding claim, wherein the means (20) configured to read appendix information is configured to determine whether the read appendix information and a previously read appendix information are included in a same field and on a negative determination to decode the read appendix information.

6. An apparatus according to claim 5, wherein on a negative determination the means (20) configured to read appendix information is configured to determine whether the read appendix information contains valid information and, if the read appendix information contains valid information, to decode the read appendix information so as to provide decoded appendix information.

7. An apparatus according to any preceding claim, wherein the appendix information comprises at least one of caption information, V-CHIP information and/or teletext information.

8. An apparatus according to any preceding claim, wherein the means (20) configured to read appendix information is operable to read the appendix information using an Inter-Integrated Circuit (I2C).

9. A method comprising:
using extracting means (10) to extract appendix information from a received signal; and
reading the appendix information from the extracting means (10) at times separated by a predetermined read-time interval.

10. A computer program comprising machine readable instructions which when executed by data processing apparatus causes it to perform the steps of claim 9.
